# EUROPÄISCHE PATENTSCHRIFT

(11) **EP 1 577 592 B1**
(45) Veröffentlichungstag und Bekanntmachung des Hinweises auf die Patenterteilung: **09.04.2008**
(21) Anmeldenummer: 04006114.5
(22) Anmeldetag: 15.03.2004
(51) Int. Cl.: F16K 3/18

(54) **Schieberventil**
Gate valve
Vanne coulissante

(43) Veröffentlichungstag der Anmeldung: 21.09.2005
(73) Patentinhaber: Applied Materials GmbH & Co. KG, 63755 Alzenau (DE)
(72) Erfinder: Sauer, Andreas, 63762 Großostheim (DE)
(74) Vertreter: Bockhorni & Kollegen

(56) Entgegenhaltungen:
- DE-A- 19 857 201
- FR-A- 1 089 995
- FR-A- 2 283 375
- FR-A- 2 500 103
- GB-A- 851 732

## Beschreibung

Die Erfindung bezieht sich auf ein Schieberventil mit den Merkmalen des Oberbegriffs des Patentanspruchs 1, sowie auf eine Beschichtungsanlage mit einem derartigen Ventil.

Einschlägige Ventile werden häufig in Durchlaufbeschichtungsanlagen eingebaut, die zum Beschichten von flexiblen Bandsubstraten, z. B. Kunststofffolien, Magnetbändern, Filmen etc., oder auch von starren Substraten wie Kunststoff- oder Glasscheiben, im Vakuum dienen.

Hierbei ist es in gewissen Zeitabständen erforderlich, die in Ballen- oder Trommelform gewickelten Bandsubstrate oder Folien in die Anlage einzubringen und sie auf einer Lagerachse aufzunehmen, so dass das Bandsubstrat während des Beschichtungsdurchlaufs von diesem Ballen abgewickelt werden kann.

Jenseits/stromab der Beschichtungskammer(n) ist eine weitere Achse mit einer Aufwickeltrommel vorgesehen, auf welche das beschichtete Bandsubstrat wieder aufgewickelt wird.

Starre Substrate werden auf Rollen liegend und durchlaufend zwischen Einlade- und Ausladestationen transportiert, die ihrerseits regelmäßig belüftet sind.

Solche Durchlaufbeschichtungsanlagen sind hierbei grundsätzlich in Module unterteilt (Einlade-, Beschichtungs- und Auslademodul), die aufeinander folgend angeordnet und durch Öffnungen miteinander verbunden sind, durch welche das Substrat in das nächstfolgende Modul geführt wird.

Es kann erforderlich sein, allein ein Beschichtungsmodul zu fluten, z. B. um eine Sputterkathode auszutauschen oder sonstige Wartungsarbeiten auszuführen, während die daran angrenzenden Module ihr aktuelles Druckniveau beibehalten können.

Man sieht deshalb schaltbare Schleusenventile zwischen den einzelnen Modulen vor. Damit wird das nach Eingriffen in im Vakuum arbeitende Module der Anlage wieder zu entlüftende Volumen deutlich verringert, da nur noch einzelne Stationen belüftet werden und die anderen Stationen stets im evakuierten Zustand verbleiben können. Natürlich kann aber bei Bedarf die gesamte Anlage belüftet werden.

Diese Ventile müssen also nicht ständig hin und her schalten, sondern werden letztlich nur bei Ladungswechseln oder sonstigen Anlagenstillständen gebraucht bzw. aktiviert, müssen dann aber die Druckdifferenz zwischen Atmosphärendruck und Vakuum abdichten.
Die Einbauposition dieser Ventile liegt zwangsläufig direkt im Bereich der Substrattransportsysteme. Diese Transportsysteme werden bei Glasbeschichtungsanlagen in der Regel als Rollengänge mit definierten Rollenabständen ausgeführt. Durch ständig wachsende Kundenanforderungen, wie immer kleiner werdende Substratmaße und steigende Durchlaufgeschwindigkeiten, wird es notwendig, die Abstände der einzelnen Transportrollen zueinander entsprechend zu verkürzen. Diese Tatsache erfordert ein sehr schmal bauendes Trenn- oder Schleusenventil, da man es zwischen zwei Transportrollen unterbringen muss, wobei die eine Transportrolle in dem einen Modul (stromauf) und die nächste Transportrolle in dem anderen Modul (stromab) liegt.

Das gattungsbildende Dokument DE 198 57 201 A1 beschreibt ein solches flach bauendes Schleusenventil zum gleichzeitigen Absperren oder Freigeben von zwei zwischen zwei Vakuumkammern vorgesehenen, miteinander fluchtenden Durchlauföffnungen, die eine geringe Höhe und eine große Breite haben. Das Ventil ist für Durchlaufanlagen zum Beschichten von großen Glasformaten konzipiert.

Es hat zum Verschließen der Öffnungen zwei einander gegenüber liegende Ventil- oder Schieberplatten. Letztere bilden eine konstruktive Einheit, die mithilfe eines ersten Stellantriebs translatorisch zwischen einer Ruhestellung, in der die Öffnungen frei sind, und einer Arbeitsstellung hin und her stellbar ist. In der Arbeitsstellung liegen die Schieberplatten zwischen den Öffnungen und überdecken diese vollständig.

Zwischen den beiden Schieberplatten, die im Ruhezustand federnd aufeinander gedrückt werden und die Öffnungen auch in der Arbeitsstellung zunächst noch nicht dicht verschließen, ist ein kurzhubiger weiterer fluidischer (pneumatischer) Schließantrieb angeordnet, der nach dem Verbringen der Schieberplatten in ihre Arbeitsstellung mit Druck beaufschlagt wird und die beiden Platten auseinander spreizt, bis sie in ihrer Schließstellung gleichzeitig gegen jeweils ihnen zugeordnete, die Öffnungen umgebende Dichtflächen anliegen und die Öffnungen somit dicht verschließen. Die Reaktionskräfte des Schließantriebs werden jeweils über die gegenüberliegende Ventilplatte abgetragen.

Zum Öffnen dieses Ventils wird die Druckbeaufschlagung des Stellantriebs aufgehoben; er kann zusätzlich in Umkehrrichtung mit Unterdruck beaufschlagt werden, um die auf die Schieberplatten rückstellend einwirkenden Federkräfte zu unterstützen.
Bei diesem bekannten Ventil sind elastische Dichtringe in Nuten der Schieberplatten eingelegt.

US-PS 4,157,169 offenbart ein anderes, prinzipiell sehr ähnlich wie das vorstehend erörterte aufgebautes Schleusenventil, das zum Öffnen und Schließen zweier runder Durchlauföffnungen vorgesehen ist. Hier sind keine weichelastischen Dichtringe, sondern Ventilsitze in Gestalt von Weichmetallauflagen an den Rändern der Öffnungen vorgesehen, mit denen an den Schieberplatten angeordnete Dichtringe, ebenfalls aus Weichmetall, korrespondieren.

Bei beiden Lösungen müssen der fluidische Schließantrieb der Schieberplatten und folglich auch dessen Zufuhrleitungen bei den Umschaltvorgängen zwischen Ruhe- und Arbeitsstellungen hin und her mitbewegt werden. Folglich sind die beweglichen Schieberteile verhältnismäßig kompliziert und aufwändig.

DE 44 46 946 C1 erörtert ein weiteres ähnliches Schieberventil mit einem aus einer Ruhestellung in eine Arbeitsstellung stellbaren Ventilteller in Gestalt einer einfachen Platte. Hinsichtlich des dichtenden Andrückens dieses Ventiltellers an seinen Ventilsitz und der Bauart der verwendeten Dichtungen schweigt sich dieses Dokument aus. Außerdem hat dieses Schieberventil nur eine Wirkrichtung, da nur auf einer Seite der Schieberplatte ein Ventilsitz vorgesehen ist.

Aus der GB 851,732 ist ein doppeltwirkendes Ventil für Rohrleitungen bekannt, bei dem zwei beidseits einer Schieberplatte gegenüberliegend angeordnete Schließantriebe vorgesehen sind, die als aufblasbare und umlaufende Schlauchdichtungen ausgeführt sind. Zum Schließen des Schieberventils kann jede Schlauchdichtung unabhängig mit Druck beaufschlagt werden; sie können jedoch auch zugleich aktiviert werden. Nachteilig an diesem Schieberventil ist es, dass die Dichtungen ohne weiteres verschmutzen können und dadurch undicht werden, was insbesondere bei Vakuumbeschichtungsanlagen ein Problem darstellt.

Aus den Fig. 4 und 5 der FR 1 089 995 ist ebenfalls ein doppeltwirkendes Ventil für Rohrleitungen bekannt. Bei diesem wirken beidseitig zwei Ringdichtungen, die von Schlauchdichtungen in ihrer Dichtwirkung unterstützt werden. Die Schlauchdichtungen werden jeweils mit dem Druck des über das Ventil gesperrten bzw. transportierten Mediums beaufschlagt. Als Schließantrieb ist eine verschiebbare Flanschfläche des Ventils vorgesehen, die die beiden Ringdichtungen an die Schieberplatte pressen. Dieses kompliziert aufgebaute Schieberventil bewirkt Abrieb auf den Dichtungen und ist für Vakuumanlagen nicht geeignet.

Der Erfindung liegt die Aufgabe zu Grunde, ein besonders flach bauendes Schieberventil zu schaffen, das für den Einbau insbesondere zwischen zwei nahe aufeinander folgenden Rollen einer Durchlaufbeschichtungsanlage geeignet ist und gleichwohl sehr hohe Druckdifferenzen erträgt und zuverlässig abdichtet, wobei seine beweglichen Teile möglichst einfach aufgebaut sein sollen.

Diese Aufgabe wird erfindungsgemäß mit den Merkmalen des Patentanspruchs 1 gelöst. Der nebengeordnete Patentanspruch 14 bezieht sich auf eine mit dem erfindungsgemäßen Schieberventil ausgestattete Anlage. Die Merkmale der jeweils nachgeordneten Unteransprüche geben vorteilhafte Weiterbildungen der Erfindung an.

Die Erfindung beschreibt ein Ventil, das vorzugsweise entweder als Wartungsventil oder als Ventil mit kleiner Zykluszahl eingesetzt wird, also nicht sehr häufig geschaltet werden muss. Der Aufbau ähnelt dem eines Schieberventils mit sehr flacher Bauweise (max. 50mm), das beidseitig vakuumdicht ist. Durch sein Wirkprinzip ist es möglich, auch spaltförmige Öffnungen mit sehr großer Länge zuverlässig abzudichten. Ebenso ist das Ventil in der Lage, großwellige Unebenheiten der zu verschließenden Öffnung auszugleichen, erreicht durch die sehr flexible Bauart seiner Schieberplatte.

Bei dem erfindungsgemäßen Ventil wird eine in einem Gehäuse befindliche, einfache Platte aus einer Ruhestellung vorzugsweise mittels eines beliebigen Fremdkraft-Stellantriebes in seine Arbeitsstellung vor die zu verschließende Öffnung gebracht. Grundsätzlich wäre auch manuelles Umstellen der Schieberplatte zwischen Ruhe- und Arbeitsstellung möglich, wobei diese Option zusätzlich zu einem vorhandenen Stellantrieb für Notfälle vorbehalten sein kann.

Zum Schließen der Öffnung wird die Platte mittels eines gehäusefesten Schließantriebs zu einer Gehäusewand hin gedrückt, auf der sich die korrespondierende Dichtfläche befindet.

Reaktionskräfte des Schließantriebs werden also vorteilhaft direkt innerhalb des festen Gehäuses abgetragen.

Die Schließbewegung des erfindungsgemäßen Ventils bzw. seiner Schieberplatte verläuft winklig, vorzugsweise rechtwinklig zu der Stellbewegung zwischen der Ruhestellung und der Arbeitsstellung seiner Schieberplatte.

Wie beim Stand der Technik differenziert man auch beim erfindungsgemäßen Schieberventil zwischen dem Stellantrieb und den eigentlichen Schließantrieben.

Das erfindungsgemäße Schieberventil wird spiegelsymmetrisch mit je zwei Schließantrieben und zwei Dichtflächen aufgebaut, so dass es zwei unterschiedliche Schließstellungen einnehmen kann. In dieser Ausgestaltung kann das Schieberventil je nach Richtung der auftretenden Druckdifferenz über die Schieberplatte selektiv immer so geschlossen werden, dass der jeweils größere Druck auf einer Seite die Dichtwirkung noch verstärkt.

Die Schieberplatte ist in Dichtrichtung pendelnd aufgehängt, folglich bei den Stellbewegungen zwischen Ruhe- und Arbeitsstellung im Wesentlichen frei von Reibung; dies mindert oder vermeidet auch Verschleiß an den Dichtflächen. Unter "pendelnd" ist allerdings keine Beweglichkeit über längere Wege oder Hübe zu verstehen. Vielmehr hat die Schieberplatte quer zu der Stellrichtung zwischen Ruhe- und Arbeitsstellung gewisse geringe Freiheitsgrade, die eher als begrenztes seitliches Spiel anzusehen sind. Es kann für eine zuverlässige Funktion des Schieberventils vollauf genügen, die Schieberplatte um einige wenige Zehntel Millimeter aus ihrer Arbeits- in ihre jeweilige Dichtstellung zu bewegen bzw. auszulenken.

Die Schließantriebe sind durch Fluiddruck aktivierbar, d. h. sie umfassen mindestens einen mit einem Druckanschluss versehenen geschlossenen Raum mit mindestens einer beweglichen Wand. Es ist nicht unbedingt erforderlich, diese Schließantriebe sich vollständig um die gesamte Öffnung erstrecken zu lassen, sondern man kann grundsätzlich einen in mehrere Abschnitte oder einzelne Stellantriebe unterteilten Schließantrieb vorsehen (wie es ähnlich auch im gattungsbildenden Stand der Technik beschrieben wird). In diesem Ausführungsfall ist natürlich eine gleichmäßige Verteilung der einzelnen Antriebsteile entlang dem Umfang der zu verschließenden Öffnung vorzuziehen, wenn auch nicht unbedingt funktionsnotwendig.

Besonders bevorzugt wird allerdings eine ringartig geschlossene, schlauchreifenartige Ausführung des Schließantriebs, zumal er sich in dieser Ausführung auch noch als zusätzlicher Dichtring an die glattwandige Schieberplatte anlegen lässt und damit z. B. auch den (ungewollten) Auftrag von Beschichtungspartikeln, die aus der Vakuumkammer in die Öffnung und zu dem Ventil gelangen können (auch Overspray genannt), auf die eigentlichen Dichtringe verhindert.

Vorzugsweise liegen die Schließantriebe und die korrespondierenden Dichtungen (diese können vorteilhaft als in Nuten eingelegte Rundschnur-Dichtringe ausgeführt werden) auf konzentrischen parallelen Bahnen um die zu verschließenden Öffnungen herum, wobei die Schließantriebe außerhalb oder innerhalb der von diesen Dichtungen umschriebenen Flächen angeordnet werden können.
In der zweitgenannten Anordnung schützen die Schließantriebe die Dichtringe, wie bereits erwähnt, weitestgehend vor ungewollten Ablagerungen.

Insgesamt hat diese Ausführung mit einer einfachen, glatten Schieberplatte den großen Vorteil, dass langwellige Unebenheiten der Dichtflächen durch Eigenflexibilität der großflächig und über den gesamten Umfang der zu verschließenden Öffnung angepressten Schieberplatte ausgeglichen werden können, so dass selbst geringfügiger Verzug des Dichtsitzes infolge Maß- oder Flächenabweichungen oder ungleichmäßigen Anziehens von Schrauben etc. nicht zwangsläufig zu Undichtigkeiten des erfindungsgemäßen Schieberventils führen. Insbesondere können auch sehr große, schlitzartige Öffnungen von mehreren Metern Breite, die z. B. bei Durchlaufbeschichtungsanlagen für mehr als 3 m breite Glasplatten üblich und notwendig sind, sicher auch gegen die Druckdifferenzen zwischen Vakuum und Atmosphärendruck abgeschlossen werden.

Denkbar wäre ferner auch eine Arbeitsweise des erfindungsgemäßen Schieberventils mit gleichzeitiger Aktivierung der beiden (umfangsgeschlossenen) Schließantriebe, wobei jeder Schließantrieb eine Mischung aus Antriebsorgan und Dichtfläche bildet. Hierdurch könnte allerdings auch nicht auf gesonderte Dichtringe verzichtet werden, denn man muss stets die Möglichkeit von (unerwünschten) Ablagerungen aus dem Beschichungsprozess auf den Schließantrieben in Betracht ziehen, die auf längere Sicht die Dichtigkeit beeinträchtigen könnten.

Weitere Einzelheiten und Vorteile des Gegenstands der Erfindung gehen aus der Zeichnung eines Ausführungsbeispiels und deren sich im Folgenden anschließender eingehender Beschreibung hervor.

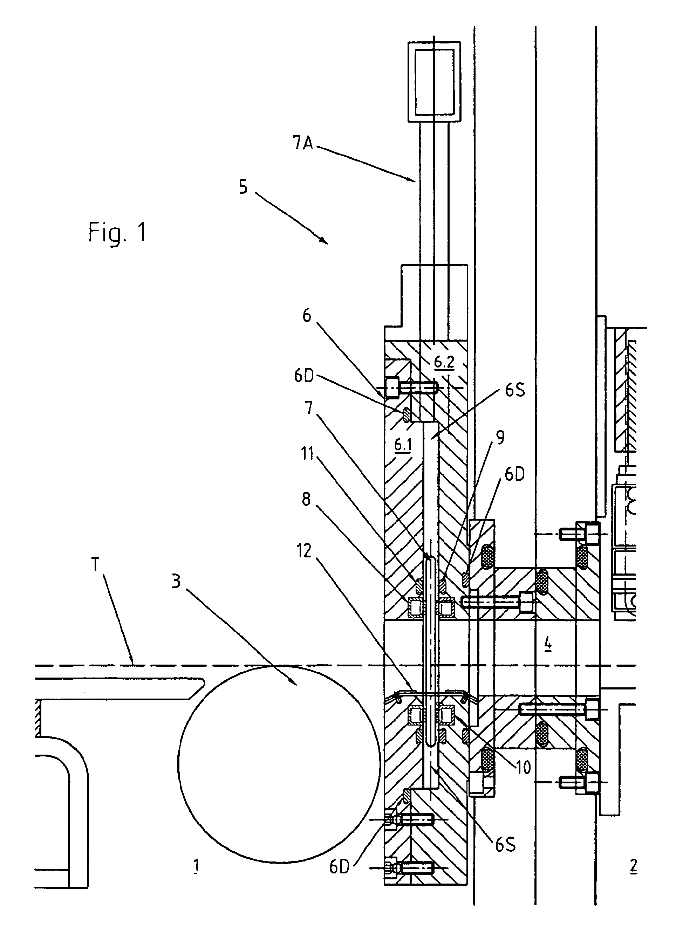

- Figur 1: zeigt schematisch einen Querschnitt durch das Schieberventil gemäß der Erfindung in der Arbeitsstellung der Schieberplatte,
- Figur 2: zeigt denselben Querschnitt in der Ruhestellung der Schieberplatte.

Dieser Querschnitt zeigt den Übergang zwischen zwei Modulen 1, 2 einer Durchlaufbeschichtungsanlage. Es sei angenommen, dass (hier nur durch eine waagerechte Transportebene T angedeutete) Stück-Substrate diesen Übergang von links nach rechts durchlaufen, wobei sie von dicht aufeinander folgenden Rollen 3 getragen werden (in dem relativ kurzen gezeigten Ausschnitt der Anlage ist allerdings nur eine Rolle 3 schematisch dargestellt).

Zwischen den beiden Modulen 1 und 2 ist eine Öffnung 4 vorgesehen, die senkrecht zur Zeichnungsebene deutlich größere Abmessungen haben kann als in ihrer hier sichtbaren Höhe, also als schlitzförmig betrachtet werden kann, jedoch insgesamt mit möglichst kleinem freiem Querschnitt ausgeführt wird. Sie muss im bevorzugten Anwendungsfall gerade groß genug sein, um ebene Glasplatten von mehr als 3 m Breite durchlaufen zu lassen.

Erkennbar sind die beiden Module im Bereich der Öffnung 4 sehr fest und dicht miteinander verbunden, um jegliche Nebenstrombildung zu vermeiden, wenn diese Öffnung 4 mithilfe des nun zu beschreibenden Schieberventils verschlossen ist und z. B. im Modul 2 ein Vakuum herrscht, während das Modul 1 belüftet wird.

Das Schieberventil 5 umfasst zunächst ein Gehäuse 6 mit zwei Gehäuseteilen 6.1 und 6.2. Es versteht sich, dass dieses Gehäuse 6 in sich sehr gut abgedichtet ist, so weit es aus verschiedenen Bauteilen zusammengesetzt ist. Man erkennt hier z. B. einen Dichtring 6D in der Fuge zwischen den beiden Gehäuseteilen 6.1 und 6.2, und einen weiteren Dichtring 6D in der Fuge zwischen dem Gehäuseteil 6.2 und der Wand des Übergangs, auf die das Gehäuse 6 insgesamt im Bereich der Öffnung 4 aufgespannt ist.
Das Gehäuse 6 ist insgesamt ebenfalls von der Öffnung 4 durchdrungen bzw. es hat einen Kanal, der eine Fortsetzung der besagten Öffnung 4 mit gleich bleibendem freiem Querschnitt bildet.

Man erkennt, dass im Gegensatz zum einleitend genannten Stand der Technik dieses Schieberventil nicht zwischen den beiden Modulen 1 und 2 angeordnet sein muss, sondern dass sein Gehäuse 6 einseitig an die Wand des Moduls 1 angeschraubt ist. Damit wird eine gewisse Reduzierung des Abstandes der beiden Module möglich. Gleichwohl ist es natürlich je nach Anlagentyp und verfügbarem Bauraum möglich, das erfindungsgemäße Ventil auch in eine Fuge, einen Zwischenraum oder Übergang zwischen zwei Modulen einzubauen, wobei sein Kanal zwischen die beiden hier direkt miteinander verbundenen Öffnungen der Module zu liegen käme.

Die beiden Gehäuseteile 6.1 und 6.2 bilden zwischen sich einen Führungsschlitz 6S, in dem eine Schieberplatte 7 pendelnd, d. h. in der Normalenrichtung zu ihren Hauptflächen gesehen mit geringem seitlichem Spiel gelagert ist. Sie hängt an einem nicht näher dargestellten translatorischen Stellantrieb 7A.

Dessen hier nicht näher gezeigtes Stellglied ist mit der Schieberplatte 7 in geeigneter Weise verbunden, um deren seitliche Auslenkungen zu ermöglichen. Diese Verbindung zwischen dem Stellantrieb 7A und der Schieberplatte 7 durchdringt das Gehäuse 6. Besondere Dichtungsmaßnahmen sind an dieser Stelle nur dann erforderlich, wenn der Stellantrieb 7A sich außerhalb des Moduls 1 bzw. außerhalb des evakuierbaren Volumens befinden sollte.

Der (senkrechte) Führungsschlitz 6S erstreckt sich, ebenso wie die in ihm aufgenommene Schieberplatte, quer zur (waagerechten) Achse der Öffnung 4, und zwar abschnittweise beidseits der Transportebene T. Sein wesentlicher Längenanteil befindet sich oberhalb der Transportebene T, jedoch ist auch unterhalb ein kurzer Abschnitt vorgesehen.

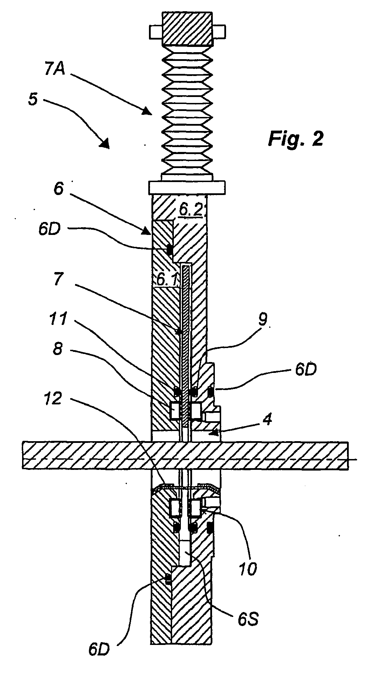

Innerhalb des Führungsschlitzes 6S ist die Schieberplatte 7 mithilfe des Stellantriebs 7A hin und her stellbar, und zwar zwischen einer Ruhestellung (vgl. Fig. 2), in der die Öffnung 4 vollständig geöffnet ist und Substrate sie durchlaufen können, und der hier gezeigten Arbeits- oder Schließstellung, in der die Schieberplatte 7 die schlitzförmige Öffnung 4 vollständig abdeckt.

In der Ruhestellung ist die Schieberplatte 7 vollständig im oberen Teil des Führungsschlitzes 6S aufgenommen, in der Arbeitsstellung taucht ihre Unterkante klingenartig in den unteren Abschnitt des Führungsschlitzes 6S ein, während ihr oberer Teil noch in dessen oberem Abschnitt verbleibt. Es ist wesentlich, dass die Schieberplatte 7 überall den Rand der Öffnung 4 überdeckt.

Die Hin- und Her-Bewegung der Schieberplatte 7 mittels des Stellantriebs 7A erfolgt zunächst frei, ohne allzu enge Führung im Führungsschlitz 6S, d. h. auch mit vernachlässigbarer Reibung. Folglich muss der Stellantrieb 7A keine allzu hohen Stellkräfte aufbringen. Er kann beispielsweise ein pneumatischer oder hydraulischer Hubzylinder sein, ein Zahnstangenantrieb, oder ein elektromagnetischer Linearmotor. Er muss keinen langen Hub ausführen (einige Zentimeter) und muss auch die Dichtplatte nur relativ grob in ihrer Arbeitsstellung positionieren können.

Seine Verbindung mit der Schieberplatte bedarf jedenfalls, wie schon erwähnt, einer gewissen Elastizität oder Gelenkigkeit, da die Schieberplatte 7, wie nun beschrieben wird, auch senkrecht zur Stellrichtung des Linearantriebs 7A verschiebbar sein muss, wenn auch nur um geringe Hübe. Man kann hier z. B. am Ende des Stellglieds des Stellantriebs 7A eine Gabel vorsehen, deren beide Schenkel mittels einer, zweier oder mehr Achsen verbunden sind, an denen die Schieberplatte 7 in der erforderlichen Weise beweglich aufgehängt ist.

Es sei angemerkt, dass der Stellantrieb 7A stellvertretend für eine Mehrzahl von gleichartigen, synchron steuerbaren Stellantrieben steht, die bei Bedarf einzusetzen sind, wenn die Schieberplatte 7 sich ggf. über mehrere Meter Länge senkrecht zur Zeichnungsebene erstreckt.

In die linke Gehäusehälfte 6.1 ist ein erster Schließantrieb 8 eingelassen. Er ist vorzugsweise als aufblasbare Dichtung ausgeführt, die in eine umlaufende Ringnut der Gehäusewand eingelegt ist und ihrerseits den gesamten Umfang der Öffnung 4 umgibt. Funktional korrespondiert mit diesem Schließantrieb 8 eine Ringdichtung 9, die in die Wand der gegenüberliegenden Gehäusehälfte 6.2 ebenfalls in eine Ringnut eingelassen ist und ebenfalls die Öffnung 4 vollständig umgibt.

Exakt gegenüber (bezüglich der Mittelebene des Führungsschlitzes 6S und der Schieberplatte 7) dem Schließantrieb 8 im dargestellten Ausführungsbeispiel ist in die gegenüber liegende Wand des Gehäuseteils 6.2 ein zweiter Schließantrieb 10 gleicher Bauart wie der Schließantrieb 8 eingelassen. Er liegt innerhalb der von der Ringdichtung 9 umschriebenen Fläche.

Mit dem Schließantrieb 10 wiederum korrespondiert funktional eine Ringdichtung 11, die in die Wand des Gehäuseteils 6.1 eingelassen ist, wiederum exakt gegenüber der Ringdichtung 9, und den Schließantrieb 8 rings umgibt.

Die Schließantriebe 8 und 10 sind innerhalb der von den Dichtringen 9 und 11 umschriebenen Flächen angeordnet, so dass der Schließantrieb den jeweils auf derselben Seite liegenden Dichtring vor Overspray schützt.

Es ist, wie schon erwähnt, nicht zwingend erforderlich, die Schließantriebe 8 und/oder 10 als einheitliche, schlauchreifenartig umlaufende Kammern auszulegen. Es ist insbesondere auch denkbar, die Schließantriebe statt umlaufend nur als zwei parallele längliche Abschnitte beidseits der Öffnung 4 auszuführen. Auch damit wäre noch ein wesentlicher Schutz der Dichtringe gegen Overspray gewährleistet.

Man könnte ferner eine Anzahl von Einzelkammern gleichmäßig über den Umfang der Dichtflächen verteilen, die natürlich alle fluidisch miteinander kommunizieren und synchron mit Druck beaufschlagt werden müssen. Diese Ausführung hätte dann ihre Vorteile, wenn in dem betreffenden Bereich noch andere Funktionsteile der Anlage untergebracht werden müssten, die unverträglich mit durchlaufenden Schließantrieben wären.

Auch mit den vorstehenden Anordnungsvarianten sähe die Schnittdarstellung des Schieberventils nicht notwendig anders aus als hier gezeigt, abhängig von der Lage der Schnittlinie.

Die hier erörterte umlaufende Konfiguration der Schließantriebe 8 und 10 hat allerdings den Vorteil, dass sie bei geeigneter Auslegung ihrer Außenflächen als Sekundärdichtungen auf der glatten Fläche der Schieberplatte 7 anliegen und damit die Dichtwirkung der Dichtringe 9 bzw. 11 noch unterstützen, solange ihr Innenraum mit Druck beaufschlagt ist.

Unterhalb der Transportebene T ist im Bereich der Öffnung 4 und des Führungsschlitzes 6S in dem Gehäuse ein Streifen 12 aus dauerelastischem Material austauschbar befestigt. Er verschließt den unterhalb der Transportebene liegenden Abschnitt des Führungsschlitzes 6S und verhindert das Hinabfallen von Partikeln in den unteren Abschnitt des Führungsschlitzes 6S. Er ist als Lippendichtung geteilt ausgeführt und lässt die Schieberplatte 7 ungehindert eintauchen, wenn diese in ihre Arbeitsstellung gebracht wird.

Es versteht sich, dass die Dichtringe 9 und 11 sowie die Schließantriebe 8 und 10 jeweils so weit in die jeweiligen Gehäusewände eingelassen sind bzw. ggf durch Unterdruckbeaufschlagung darin einziehbar sind, dass Beschädigungen oder auch nur Reibung durch Kontakte mit der Schieberplatte 7 während deren Umstellbewegung zwischen Ruhe- und Arbeitsstellung ausgeschlossen werden können.

Zugleich ist natürlich durch geeignete Sicherungsmaßnahmen auszuschließen, dass der Stellantrieb 7A aktiviert wird, während einer der Schließantriebe 8 und 10 mit Druck beaufschlagt ist. Eine rein manuelle Betätigung der Schieberplatte 7 im aktivierten Zustand eines der Schließantriebe 8 oder 10 dürfte ohnehin wegen der hohen Anpresskräfte unmöglich sein.

Man erkennt, dass die Schieberplatte 7 im Vergleich mit den Dicken der Gehäuseteile 6.1 und 6.2 recht dünn und leicht gehalten werden kann. Im Zusammenwirken mit einer möglichst gleichmäßigen Verteilung der von den Schließantrieben 8 bzw. 10 her einwirkenden Schließkräfte wird sich die Schieberplatte 7 folglich exakt dem Verlauf der Dichtringe 9 bzw. 11 anschmiegen können, selbst wenn diese geringfügige langwellige Abweichungen aus der ideellen Dichtebene aufweisen sollten.
Im Regelfall wird die Schieberplatte 7 von dem Antrieb 7A dann betätigt, wenn der Druck in beiden voneinander abzutrennenden Modulen (noch oder wieder) gleich ist, also z. B. beidseitig Atmosphärendruck oder beidseitig Vakuum anliegt.

Ist ihre Arbeitsstellung erreicht (ihre Unterkante liegt eingetaucht im unteren Teil des Führungsschlitzes 6S), so wird je nach der Richtung der über die Schieberplatte 7 abzuschließenden (noch aufzubauenden) Druckdifferenz (z. B. Vakuum im Modul 2, Atmosphärendruck im Modul 1 oder umgekehrt) einer der Schließantriebe 8 oder 10 mit Innendruck gespeist / beaufschlagt, wobei vorzugsweise der vom geringeren Druckniveau abgewandt angeordnete Schließantrieb aktiviert wird.

Soll z. B. in der Schließstellung des Schieberventils 5 Vakuum im Modul 2 anliegen, so wird der (linke) Schließantrieb 8 aktiviert. Durch das resultierende Aufblasen seines Schlauchquerschnitts wird die Schieberplatte 7 insgesamt gegen die (rechte) Ringdichtung 9 gepresst.

Soll hingegen in der Schließstellung des Schieberventils 6 der Druck im Modul 1 kleiner als der im Modul 2 werden, so wird man den (rechten) Schließantrieb 10 aktivieren, um die Schieberplatte 7 gegen die (linke) Ringdichtung 11 zu drücken.

Durch diese Maßnahmen wird die Belastung des flexiblen Mantels der Schließantriebe 8 bzw. 10 mit übermäßigen Druckdifferenzen (Innendruck gegen Vakuum) vermieden.

Offensichtlich wird die Anpresskraft der Schließantriebe 8 bzw. 10 mit wachsendem Aufbau einer Druckdifferenz zwischen den Modulen 1 und 2 noch unterstützt, da der höhere Druck auf der einen Seite die Schieberplatte 7 noch stärker auf die Ringdichtung 9 bzw. 11 drückt.

Man versteht ferner, dass die Schließantriebe 8 und 10 die eigentlichen Ventilantriebe sind, welche die Dichtungsfunktion sicherstellen. Der Stellantrieb 7A ist lediglich zum Positionieren der Schieberplatte in ihre generelle Arbeitsstellung vorgesehen, unabhängig von der Richtung der Druckdifferenz. Hierdurch kann die eigentliche Dichtfunktion des Schieberventils 6 bzw. der einstückigen Schieberplatte 7 hier in beiden Richtungen genutzt werden, indem wahlweise einer der Schließantriebe 8 oder 10 betätigt wird.

Man erkennt, dass das hier beschriebene und gezeigte Ausführungsbeispiel des Schieberventils 6 in seinen Teilen mit Dichtungsfunktion spiegelsymmetrisch aufgebaut ist und deshalb in beide Richtungen eine hohe Druckdifferenz über die Ebene der Schieberplatte 7 ertragen kann.

Nach Abbau der vom Schieberventil 5 abzuschließenden Druckdifferenz, ggf. auch nach aktivem Zurückziehen des zuvor aktivierten Schließantriebs 8 oder 10, kann der Stellantrieb 7A die Schieberplatte wieder in ihre Ruhestellung überführen. Ggf. kann das Lösen der Schieberplatte 7 von den Dichtringen 9 oder 11 mittels hier nicht dargestellter Blatt- oder Tellerfedern unterstützt werden, deren Rückstellkraft natürlich von den Schließantrieben überwunden werden muss.

Es versteht sich, dass das erfindungsgemäße Schieberventil, wenn es auch anhand eines bevorzugten Ausführungsbeispiels für Durchlauf-Beschichtungsanlagen für große Einzelsubstrate beschrieben wurde, unabhängig von dieser Verwendung auch anderweitig eingesetzt werden kann.

## Patentansprüche

1. Schieberventil (5) für Vakuumbeschichtungsanlagen, zum Abtrennen zweier aufeinander folgender Module (1, 2) oder Kammern, in denen unterschiedliche Druckniveaus, z. B. Vakuum und Atmosphärendruck, einstellbar sind, mit mindestens einer Schieberplatte (7), die in einem von einer Öffnung (4) durchsetzten Gehäuse (6) geführt und zwischen einer die Öffnung (4) freigebenden Ruhestellung und einer die Öffnung (4) vollständig überdeckenden Arbeitsstellung hin und her bewegbar ist, wobei die Fläche der Schieberplatte (7) größer als der freie Querschnitt der Öffnung (4) ist, und mit mindestens einem Schließantrieb (8, 10), der zum Einwirken auf die Schieberplatte (7) in deren Arbeitsstellung und zu deren dichtendem Anlegen in eine Schließstellung gegen eine Dichtfläche (9, 11) aktivierbar ist, welche die das Gehäuse (6) durchsetzende Öffnung (4) umgibt, wobei der mindestens eine Schließantrieb (8, 10) bezüglich der Stellbewegung der Schieberplatte (7) fest in dem Gehäuse (6) angeordnet ist, wobei in dem Gehäuse (6) beidseits der Schieberplatte (7) jeweils mindestens ein Schließantrieb (8, 10) vorgesehen ist, wobei jeder Schließantrieb (8, 10) durch Fluiddruck wahlweise aktivierbar ist und mindestens einen mit einem Druckanschluss versehenen geschlossenen Raum mit mindestens einer beweglichen Wand aufweist, **dadurch gekennzeichnet, dass** das Gehäuse (6) zwei einander gegenüber liegende, die es durchsetzende Öffnung (4) umgebende Dichtflächen umfasst, wobei die Schieberplatte (7) von jeweils einem der Schließantriebe (8, 10) an die bezüglich dieses Schließantriebs (8, 10) jenseits der Schieberplatte (7) angeordnete Dichtfläche (11, 9) anlegbar ist, und dass die Schließantriebe (8, 10) jeweils innerhalb der von der Dichtung umschriebenen Fläche angeordnet sind, wobei die Schieberplatte (7) in Dichtrichtung pendelnd aufgehängt oder angeordnet ist.

2. Schieberventil nach Anspruch 1, **dadurch gekennzeichnet, dass** die Schieberplatte (7) als einfache glattflächige und dünne Platte ausgeführt ist.

3. Schieberventil nach Anspruch 1 oder 2, **dadurch gekennzeichnet, dass** das Gehäuse (6) mindestens zwei, vorzugsweise miteinander verschraubte, Teile (6.1, 6.2) umfasst, die zwischen sich einen Führungsschlitz (6S) für die Schieberplatte (7) bilden, wobei der Führungsschlitz (6S) winklig, insbesondere rechtwinklig zur Achse der Öffnung verläuft und einerseits der Öffnung (4) eine zum Aufnehmen der Schieberplatte (7) in ihrer die Öffnung (4) freigebende Ruhestellung ausreichende Ausdehnung und andererseits der Öffnung (4) eine das Eintauchen der Schieberplatte (7) in ihrer Arbeitsstellung ermöglichende Fortsetzung umfasst.

4. Schieberventil nach Anspruch 3, **dadurch gekennzeichnet, dass** ein in Einbaustellung unterhalb der Öffnung (4) liegender Abschnitt des Führungsschlitzes (6S) mittels einer das Eindringen der Schieberplatte (7) erlaubenden Lippendichtung (12) abgedeckt ist.

5. Schieberventil nach Anspruch 3 oder 4, **dadurch gekennzeichnet, dass** jeder Schließantrieb (8, 10) und jede Dichtfläche (9, 11) für die Schieberplatte (7) an oder eingesenkt in einer Wand des Führungsschlitzes (6S) angeordnet ist.

6. Schieberventil nach einem der vorhergehenden Ansprüche **dadurch gekennzeichnet, dass** ein oder beide Schließantriebe mehrere entlang dem Umfang der Öffnung gleichmäßig verteilte einzelne Stelleinheiten umfassen.

7. Schieberventil nach einem der vorhergehenden Ansprüche 1 bis 5, **dadurch gekennzeichnet, dass** ein oder beide Schließantriebe (8, 10) zwei sich in Einbaulage des Schieberventils oberhalb und unterhalb der Öffnung (4) erstreckende Stelleinheiten aufweisen.

8. Schieberventil nach einem der vorhergehenden Ansprüche 1 bis 5, **dadurch gekennzeichnet, dass** ein oder beide Schließantriebe (8, 10) eine einzige, sich umfangsgeschlossen rings um die Öffnung (4) erstreckende Stelleinheit umfassen.

9. Schieberventil nach einem der vorstehenden Ansprüche, **dadurch gekennzeichnet, dass** die Dichtflächen (9, 11) mit Ringdichtungen versehen sind, gegen welche die Schieberplatte (7) mithilfe der Schließantriebe (8, 10) andrückbar ist.

10. Schieberventil nach Anspruch 9, **dadurch gekennzeichnet, dass** die Ringdichtungen (9, 11) und die Schließantriebe (8, 10) auf parallelen Bahnen um den Rand der Öffnung (4) herum angeordnet sind.

11. Schieberventil nach einem der vorhergehenden Ansprüche, **dadurch gekennzeichnet, dass** eine bewegliche Wand des durch Fluiddruck aktivierbaren Schließantriebs (8, 10) bei Druckbeaufschlagung unmittelbar auf die Schieberplatte (7) einwirkt.

12. Schieberventil nach einem der vorstehenden Ansprüche mit mindestens einem Stellantrieb (7A), insbesondere einem translatorischen Stellantrieb, zum Einstellen der Ruhestellung und der Arbeitsstellung der Schieberplatte (7).

13. Schieberventil nach Anspruch 12, dessen Schieberplatte (7) mit dem mindestens einen Stellantrieb (7A) mittels einer quer zu dessen Stellrichtung flexiblen und das Gehäuse (6) durchdringenden Verbindung verbunden ist.

14. Anlage zum Bearbeiten, insbesondere zum Beschichten von durchlaufenden Substraten, die mindestens zwei über eine Durchlauföffnung (4) miteinander verbundene Module (1, 2) und mindestens ein zum Verschließen dieser Öffnung (4) vorgesehenes Schieberventil (5) nach einem der vorstehenden Ansprüche umfasst.

15. Anlage nach Anspruch 14, in der das Gehäuse (6) des Schieberventils (5) an einer Innenwand eines der beiden benachbarten Module (1, 2) befestigt ist.

16. Anlage nach Anspruch 14, in der das Gehäuse (6) des Schieberventils in einer Fuge zwischen den beiden benachbarten Modulen befestigt ist.

## Claims

1. A slide valve (5) for vacuum coating installations for separating two successive modules (1, 2) or chambers, in which different pressure levels, e.g. vacuum and atmospheric pressure, may be set, including at least one slide plate (7), which is guided in a housing (6), which is traversed by an opening (4), and is movable back and forth between a rest position, in which the opening (4) is exposed, and a working position, in which it overlaps completely with the opening (4), wherein the area of the slide plate (7) is greater than the free cross-sectional area of the opening (4), and with at least one closing actuator (8, 10), which may be activated to act on the slide plate (7) in its working position and to sealingly engage it in a closed position against a sealing surface (9, 11), which surrounds the opening passing through the housing (6), wherein the at least one closing actuator (8, 10) is fixedly arranged in the housing (6) with respect to the positioning movement of the slide plate (7), wherein at least one closing actuator (8, 10) is provided in the housing (6) on each side of the slide plate (7), whereby each closing actuator (8, 10) is selectively actuable by fluid pressure and includes at least one closed space, which is provided with a pressure connection, with at least one movable wall, **characterised in that** the housing (6) includes two opposing sealing surfaces, which surround the traversing opening (4), whereby the slide plate (7) may be applied by a respective one of the closing actuators (8, 10) against the sealing surface (11, 9) arranged on the other side of the slide plate (7) with respect to this closing actuator (8, 10) and that the closing actuators (8, 10) are arranged within the area circumscribed by the seal, whereby the slide plate (7) is arranged or suspended oscillating in the sealing direction.

2. A slide valve as claimed in Claim 1, **characterised in that** the slide plate (7) is constructed in the form of a simple smooth surfaced and thin plate.

3. A slide valve as claimed in Claim 1 or 2, **characterised in that** the housing (6) includes at least two portions (6.1, 6.2), preferably screwed together, which define between them a guide slot (6S) for the slide plate (7), wherein the guide slot (6S) extends at an angle, particularly at a right angle, to the axis of the opening and, on one side of the opening (4), has an extent sufficient to accommodate the slide plate (7) in its rest position, in which the opening (4) is open, and, on the other side of the opening (4) has a continuation which enables the entry of the sliding plate (7) in its working position.

4. A slide valve as claimed in Claim 3, **characterised in that** a section of the guide slot (6S), which is situated below the opening (4) in the installed position, is covered by means of a lip seal (12), which permits the entry of the slide plate (7).

5. A slide valve as claimed in Claim 3 or 4, **characterised in that** each closing actuator (8, 10) and each sealing surface (9, 11) for the slide plate (7) is arranged on or recessed in a wall of the guide slot (6S).

6. A slide valve as claimed in one of the preceding claims, **characterised in that** one or both closing actuators include a number of individual positioning units uniformly distributed along the periphery of the opening.

7. A slide valve as claimed in Claim 6, **characterised in that** one or both closing actuators (8, 10) include two positioning units extending, in the installed position of the slide valve, above and below the opening (4).

8. A slide valve as claimed in one of the preceding Claims 1 to 5, **characterised in that** one or both closing actuators (8, 10) include an individual positioning unit which extends around the opening (4) with a closed periphery.

9. A slide valve as claimed in one of the preceding claims, **characterised in that** the sealing surfaces (9, 11) are provided with annular seals, against which the slide plate (7) may be pressed with the aid of the closing actuators (8, 10).

10. A slide valve as claimed in Claim 9, **characterised in that** the annular seals (9, 11) and the closing actuators (8, 10) are arranged on parallel paths around the edge of the opening (4).

11. A slide valve as claimed in one of the preceding claims, **characterised in that** a movable wall of the closing actuator (8, 10), which may be actuated by fluid pressure, acts directly on the slide plate (7), when pressure is applied to it.

12. A slide valve as claimed in one of the preceding claims with at least one positioning actuator (7A), particularly a translational positional actuator, for adjusting the rest position and the working position of the slide plate (7).

13. A slide valve as claimed in Claim 12, the slide plate (7) of which is connected to the at least one positioning actuator (7A) by means of a connection, which is flexible transverse to its positioning direction and passes through the housing (6).

14. An installation for processing, particularly coating, substrates passing through, which includes at least two modules (1, 2), which are connected together via a through opening (4), and at least one slide valve (5) as claimed in one of the preceding claims provided to close this opening (4).

15. An installation as claimed in Claim 14, in which the housing (6) of the slide valve (5) is secured to an internal wall of one of the two adjacent modules (1, 2).

16. An installation as claimed in Claim 14, in which the housing (6) of the slide valve is secured in a gap between the two adjacent modules.

## Revendications

1. Vanne à tiroir (5) pour installations de revêtement sous vide, pour la séparation de deux modules successifs (1, 2) ou chambres, dans lesquels différents niveaux de pression, par exemple de vide et de pression atmosphérique, peuvent être réglés, comprenant au moins un tiroir (7), qui est guidé dans un boîtier (6) traversé par une ouverture (4) et qui peut effectuer un mouvement de va-et-vient entre une position de repos libérant l'ouverture (4) et une position de travail recouvrant entièrement l'ouverture (4), dans laquelle la surface du tiroir (7) est supérieure à la section libre de l'ouverture (4), et comprenant au moins un entraînement de fermeture (8, 10), qui peut être activé pour agir sur le tiroir (7) dans sa position de travail et pour sa mise en appui hermétique, dans une position de fermeture, contre une surface d'étanchéité (9, 11) qui entoure l'ouverture (4) traversant le boîtier (6), dans laquelle le au moins un entraînement de fermeture (8, 10) est disposé de manière fixe dans le boîtier (6) par rapport au mouvement de positionnement du tiroir (7), dans laquelle au moins un entraînement de fermeture (8, 10) est prévu dans le boîtier (6) de chaque côté du tiroir (7), chaque entraînement de fermeture (8, 10) pouvant être activé comme souhaité sous l'effet de la pression de fluide et présentant au moins un espace fermé pourvu d'un raccord de pression, qui a au moins une paroi mobile, **caractérisée en ce que** le boîtier (6) comprend deux surfaces d'étanchéité opposées entourant l'ouverture (4) le traversant, dans laquelle le tiroir (7) peut être mis en appui par chacun des entraînements de fermeture (8, 10) sur la surface d'étanchéité (11, 9) disposée de chaque côté du tiroir (7) par rapport à cet entraînement de fermeture (8, 10), et **en ce que** les entraînements de fermeture (8, 10) sont chacun disposés à l'intérieur de la surface délimitée par la garniture d'étanchéité, le tiroir (7) étant suspendu ou disposé de manière flottante dans la direction d'étanchéité.

2. Vanne à tiroir selon la revendication 1, **caractérisée en ce que** le tiroir (7) est conçu sous la forme d'une simple plaque à surface lisse et mince.

3. Vanne à tiroir selon la revendication 1 ou 2, **caractérisée en ce que** le boîtier (6) comprend au moins deux parties (6.1, 6.2), de préférence vissées l'une à l'autre, qui forment entre elles une fente de guidage (6S) pour le tiroir (7), dans laquelle la fente de guidage (6S) s'étend de manière angulaire, en particulier à angle droit par rapport à l'axe de l'ouverture et comprend, d'un côté de l'ouverture (4), une extension suffisante pour loger le tiroir (7) dans sa position de repos libérant l'ouverture (4) et, de l'autre côté de l'ouverture (4), un prolongement permettant la descente du tiroir (7) dans sa position de travail.

4. Vanne à tiroir selon la revendication 3, **caractérisée en ce qu'**un segment de la fente de guidage (6S) se trouvant en dessous de l'ouverture (4) en position de montage est recouvert d'un joint à lèvres (12) permettant le passage du tiroir (7) .

5. Vanne à tiroir selon la revendication 3 ou 4, **caractérisée en ce que** chaque entraînement de fermeture (8, 10) et chaque surface d'étanchéité (9, 11) pour le tiroir (7) est disposé sur ou encastré dans une paroi de la fente de guidage (6S).

6. Vanne à tiroir selon l'une quelconque des revendications précédentes, **caractérisée en ce qu'**un ou les deux entraînements de fermeture comprennent plusieurs unités motrices réparties de manière régulière sur la circonférence de l'ouverture.

7. Vanne à tiroir selon l'une quelconque des revendications précédentes 1 à 5, **caractérisée en ce qu'**un ou les deux entraînements de fermeture (8, 10) présentent deux unités motrices s'étendant, en position de montage de la vanne à tiroir, au-dessus et en dessous de l'ouverture (4).

8. Vanne à tiroir selon l'une quelconque des revendications précédentes 1 à 5, **caractérisée en ce qu'**un ou les deux entraînements de fermeture (8, 10) présentent une seule unité motrice s'étendant de manière ininterrompue autour de l'ouverture (4).

9. Vanne à tiroir selon l'une quelconque des revendications précédentes, **caractérisée en ce que** les surfaces d'étanchéité (9, 11) sont pourvues de joints toriques contre lesquels le tiroir (7) peut être pressé au moyen des entraînements de fermeture (8, 10).

10. Vanne à tiroir selon la revendication 9, **caractérisée en ce que** les joints toriques (9, 11) et les entraînements de fermeture (8, 10) sont disposés sur des voies parallèles autour du bord de l'ouverture (4).

11. Vanne à tiroir selon l'une quelconque des revendications précédentes, **caractérisée en ce qu'**une paroi mobile de l'entraînement de fermeture (8, 10) activable par pression de fluide agit immédiatement sur le tiroir (7) sous l'effet d'une pression.

12. Vanne à tiroir selon l'une quelconque des revendications précédentes comprenant au moins un mécanisme moteur (7A), en particulier un mécanisme moteur de translation, pour régler la position de repos et la position de travail du tiroir (7).

13. Vanne à tiroir selon la revendication 12, dont le tiroir (7) est relié au au moins un mécanisme moteur (7A) au moyen d'une liaison flexible dans le sens transversal à la direction motrice de celui-ci et qui traverse le boîtier (6).

14. Installation pour traiter, en particulier pour revêtir des substrats continus, qui comprend au moins deux modules (1, 2) reliés entre eux par l'intermédiaire d'une ouverture de passage (4) et au moins une vanne à tiroir (5) selon l'une quelconque des revendications précédentes prévue pour fermer cette ouverture (4).

15. Installation selon la revendication 14, dans laquelle le boîtier (6) de la vanne à tiroir (5) est fixé sur une paroi interne de l'un des deux modules adjacents (1, 2).

16. Installation selon la revendication 14, dans laquelle le boîtier (6) de la vanne à tiroir est fixé dans une fente entre les deux modules adjacents.
